# EUROPEAN PATENT SPECIFICATION

(11) **EP 0 724 195 B1**
(45) Date of publication and mention of the grant of the patent: **26.04.2000**
(21) Application number: 96300531.9
(22) Date of filing: 25.01.1996
(51) Int. Cl.: G03D 15/00, G03B 27/73

(54) **Photographic printing apparatus, method and system**
Fotografisches Kopiergerät, Method und System
Appareil, méthode et système de tirage photographique

(30) Priority: 30.01.1995 JP 1265095
(43) Date of publication of application: 31.07.1996
(73) Proprietor: NORITSU KOKI CO., LTD., Wakayama-shi, Wakayama (JP)
(72) Inventor: Yamada, Junji, Wakayama-shi, Wakayama (JP)
(74) Representative: Hillier, Peter

(56) References cited:
- WO-A-90/04209
- US-A- 4 805 039
- US-A- 5 184 227
- PATENT ABSTRACTS OF JAPAN vol. 18, no. 600 (P-1826), 15 November 1994 & JP-A-06 222472 (KONICA), 12 August 1994
- PATENT ABSTRACTS OF JAPAN vol. 17, no. 341 (P-1565) 28 June 1993 & JP 05 045 854 A (FUJI PHOTO FILM) 26 February 1993

## Description

### BACKGROUND OF THE INVENTION

The present invention relates to a photographic printing apparatus for automatically examining whether the printing of index pictures from a developed negative film is needed or not.

In general, index pictures are printed upon request of a customer and used for specifying frames of image on the negative film for extra copying. Such index pictures are provided in the form of a matrix of reduced sized frames as commonly printed on a commercial service print size for allowing them to be returned back to the customer together with a set of normal size prints. When extra prints are desired, they are marked on the index print which is then submitted to a commercial DPE shop. This allows desired frames to be printed without the client or shop examining their locations on the negative film and will contribute to the ease of printing.

An example of a conventional apparatus for performing extra prints is disclosed in WO-A-90/04 209.

It is common in the prior art to classify a plurality of developed negative films into two types, index printing required one and not required one, before being loaded to the photographic printing apparatus. The former films are then subjected to both normal and index printing processes while the latter films are exposed for producing normal prints only.

The disadvantage of the prior art is however that the two types of negative films have to be separated from each other by manually examining whether or not each negative film is needed index printing before being loaded on to the photographic printing apparatus.

Although the photographic printing apparatus is equipped with an automatic negative film feeder, the negative films need to be examined for index printing and cannot be loaded automatically in a sequence. Instead, each of the negative films is examined by an operator and if its index pictures are wanted to print out, a relevant command is entered to the photographic printing apparatus. This procedure will hardly be free from the absence of examination, command entry error, and classification fault.

It is an object of the present invention, in view of the above predicament, to provide an improved photographic printing apparatus capable of examining automatically whether or not a developed negative film is needed index printing and producing correctly and readily its index pictures as well as normal prints.

### SUMMARY OF THE INVENTION

For achievement of the foregoing object of the present invention, a photographic printing apparatus a method of processing a plurality of films and a photographic printing system are provided as defined in claims 1-3.

In action, the mark(s) of a notch, punch hole, seal, or other appropriate form is provided on a given location of each negative film prior to the process of printing. The negative film with the mark(s) is then loaded to the photographic printing apparatus. As the negative film is systematically conveyed, its mark(s) is examined with a detecting means such as a bar-code sensor unit or an image sensor. For example, if the presence of notch marks is detected, it is judged that the printing of its index pictures is not desired. When none of the marks is found, it is judged that the printing of the index picture is desired and followed by sending a command of printing the index pictures to a printer which in turn produces a print of the index pictures after a set of normal prints are finished.

### BRIEF DESCRIPTION OF THE DRAWINGS

Fig.1 is an explanatory view showing a primary part of one embodiment of the present invention;
Fig.2 is a plan view of a part of a developed negative film provided with marks of the embodiment;
Fig.3 is a plan view of a part of a developed negative film provided with marks of another embodiment of the present invention; and
Fig.4 is a flowchart showing steps of printing process in a photographic printing apparatus according to the present invention.

### DETAILED DESCRIPTION OF THE PREFERRED EMBODIMENT

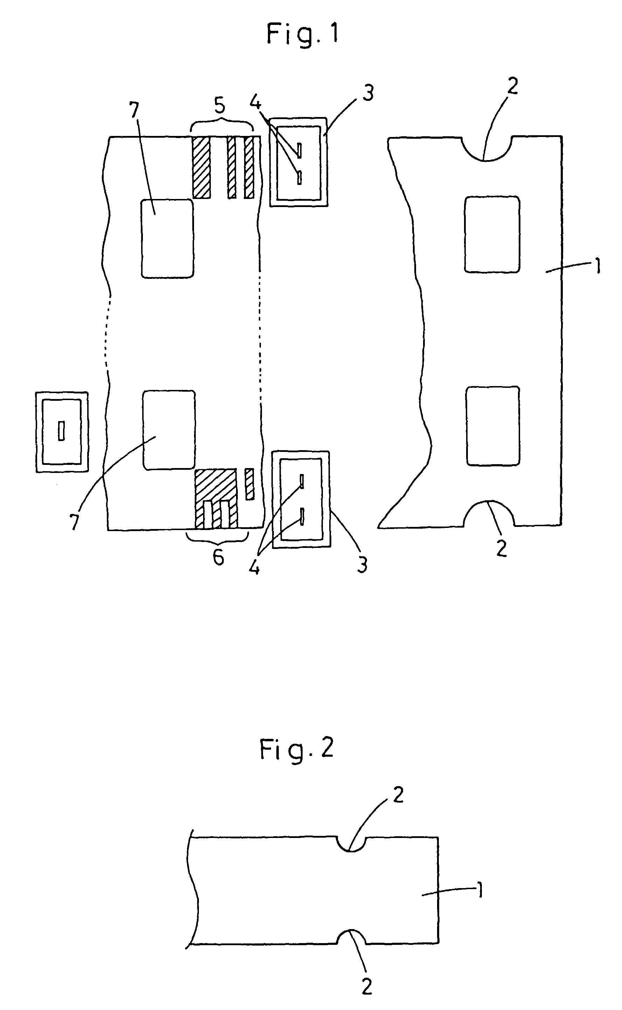

An embodiment of the present invention will be described referring to Figs.1 to 4.

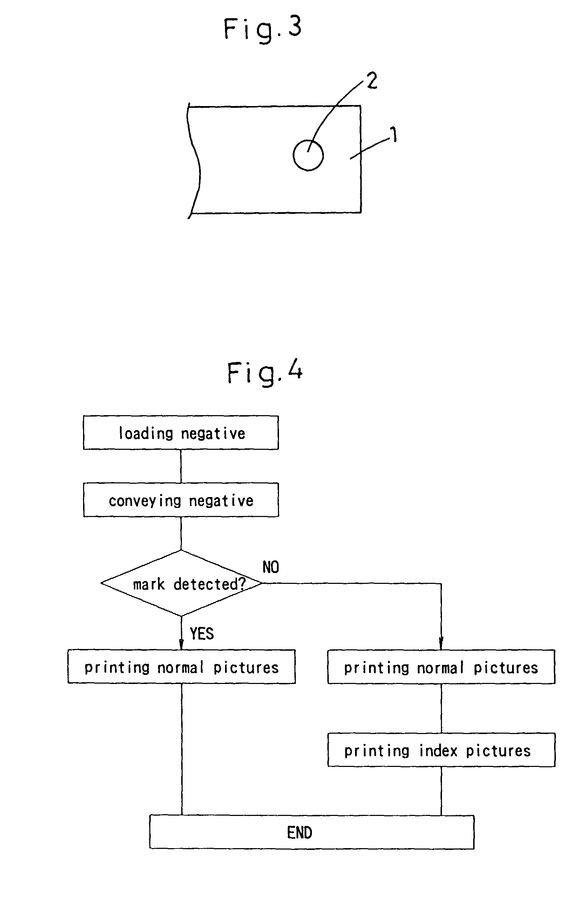

Fig.1 is an explanatory view showing a primary part of a photographic printing apparatus of one embodiment where it is examined whether or not the printing of index pictures is desired. As best shown in Figs.2 and 3, a developed photographic negative film 1 (referred to as a negative hereinafter) carries one or more marks 2 of indexing which are detected by the photographic printing apparatus for determining whether the printing of index pictures is needed or not.

More specifically, Fig.2 shows a pair of marks 2 provided in the form of two semicircular notches in the negative 1 and Fig.3 shows a single mark 2 of a round punched hole provided in a center of the negative 1. In both the embodiments, it is determined that the printing of index pictures is needed when the mark(s) 2 is absent but not when it is present as detected by the photographic printing apparatus.

The mark(s) 2 is formed in the negative 1 of which index pictures are not wanted before the action of printing a row of pictures (not shown) starts. In the action, a number of the negative 1 are loaded on to the photographic printing apparatus by an operator and automatically transferred to the exposure station where each frame of picture is paused for exposure process. The frame of picture on the negative 1 is then projected and printed on a printing paper when the time of exposure has been calculated by the photosensitive printing apparatus. At the time, the presence of the mark(s) 2 on the negative 1 is examined. If the mark(s) 2 is detected, it is judged that the printing of index pictures is not wanted. The printing of index pictures is implemented after a row of frames of the negative 1 are initially printed.

The presence of the mark(s) 2 is examined by a detecting means or bar-code sensor unit 3. As shown in Fig.1, there are further provided a sensor 4, a bar code 5 for frame numbers, a bar code 6 for index data, and rows of perforation 7.

The procedure of examining the present of the mark(s) 2 will be explained referring to a flowchart of Fig.4. The procedure starts with the step 1 for classifying a negative film 1, in which the mark(s) 2 (of notch or punch form) is provided when index pictures are not requested. The step 2 follows where the negative 1 is loaded to the photographic printing apparatus. Then, while the negative 1 being conveyed, its notch or punch mark 2 is examined with the bar-code sensor unit 3 at the step 3. This is followed by the step 4 where when the mark(s) 2 is detected, it is determined that index pictures are not needed. If none of the mark(s) 2 is found, it is judged by the controller of the photographic printing apparatus that index pictures from the negative 1 are wanted. The controller then directs the photographic printing apparatus to print the index pictures. It is understood that the mark(s) may be a seal or the like. Also, the means for detecting the mark(s) may be any type of an image sensor installed in the photographic printing apparatus.

## Claims

1. A photographic printing apparatus adapted to receive a plurality of films (1) and automatically transfer the films to an exposure station, comprising a detecting means (3,4) for detecting presence or absence of notches or punch marks (2) provided on a film (1) prior to the process of printing for indicating whether or not printing of index pictures is desired; and judging means for judging whether the printing of index pictures is desired or not according to the result of the detection; wherein the index pictures are systematically printed when it is judged by said judging means that the printing of index pictures is desired.

2. A method of processing a plurality of films comprising the steps of:
providing at least one physical mark on an individual film,
loading a plurality of films into a photographic printing apparatus,
automatically transferring the films successively to an exposure station,
determining in each case whether a film (1) carries a notch or punch mark (2) indicating that index prints are or are not to be printed and,
depending on said determination, subsequently printing said index prints.

3. A photographic printing system adapted to be used in the method according to claim 2, comprising a loading means, an exposure station, a conveying means for conveying a plurality of negative films (1) successively from said loading means to said exposure station, a detecting means (3,4) for detecting the presence or absence of one or more notches or punch marks (2) on a film prior to the process of printing said notches or punch marks indicating whether index prints are or are not required for that film, and a judging means for directing the apparatus to print index pictures depending on the detection of one or more notches or punch marks (2).

## Patentansprüche

1. Photographisches Abziehgerät, das ausgelegt ist, um eine Vielzahl von Filmen (1) aufzunehmen und die Filme automatisch nach einer Belichtungsstation zu befördern, aufweisend ein Erfassungsmittel (3, 4), um vor dem Abziehprozeß die Anwesenheit oder Abwesenheit von auf einem Film (1) vorgesehenen Kerben oder Stanzmarken (2), um anzuzeigen, ob das Abziehen der Indexbilder erwünscht ist oder nicht; und Beurteilungsmittel, um zu beurteilen, ob entsprechend dem Ergebnis der Erfassung das Abziehen der Indexbilder erwünscht ist oder nicht; wobei die Indexbilder systematisch abgezogen werden, wenn von den Beurteilungsmitteln entschieden wird, daß das Abziehen der Indexbilder erwünscht ist.

2. Verfahren zum Verarbeiten einer Vielzahl von Filmen, das die Schritte aufweist, bei denen
mindestens eine physische Marke auf einem individuellen Film vorgesehen wird,
eine Vielzahl von Filmen in ein photographisches Abziehgerät geladen wird,
die Filme nacheinander automatisch nach einer Belichtungsstation befördert werden,
in jedem Fall bestimmt wird, ob ein Film (1) eine Kerbe oder Stanzmarke (2) hat, was anzeigt, daß Indexabzüge abgezogen oder nicht abgezogen werden sollen, und
je nach der Bestimmung, danach die Indexabzüge abgezogen werden.

3. Photographisches Abziehsystem, das ausgelegt ist, um bei dem Verfahren gemäß Anspruch 2 verwendet zu werden, aufweisend ein Lademittel, eine Belichtungsstation, ein Beförderungsmittel, um eine Vielzahl von Negativfilmen (1) nacheinander von dem Lademittel nach der Belichtungsstation zu befördern, ein Erfassungsmittel (3, 4), um vor dem Abziehprozeß die Anwesenheit oder Abwesenheit von einer oder mehr Kerben oder Stanzmarken (2) auf einem Film zu erfassen, wobei die Kerben oder Stanzmarken anzeigen, ob für diesen Film Indexabzüge erforderlich sind oder nicht, und ein Beurteilungsmittel, um das Gerät anzuweisen, in Abhängigkeit von der Erfassung von einer oder mehr Kerben oder Stanzmarken (2) Indexbilder abzuziehen.

## Revendications

1. Appareil d'impression photographique destiné à recevoir plusieurs films (1), et à transférer automatiquement les films vers une station d'exposition, comprenant un moyen de détection (3, 4) pour détecter la présence ou l'absence d'encoches ou de repères perforés (2) agencés sur un film (1) avant l'impression, pour indiquer si l'impression d'images d'index est souhaitée ou non; et un moyen de jugement pour juger si l'impression d'images d'index est souhaitée ou non en fonction du résultat de la détection; les images d'index étant imprimées systématiquement lorsqu'il est jugé par ledit moyen de jugement que l'impression d'images d'index est souhaitée.

2. Procédé de traitement de plusieurs films comprenant les étapes ci-dessous:
établissement d'au moins un repère physique sur un film individuel,
chargement de plusieurs films dans un appareil d'impression photographique,
transfert automatique et successif des films dans une station d'exposition,
détermination dans chaque cas si un film (1) comporte une encoche ou un repère perforé (2), indiquant que des impressions d'images d'index ne sont pas nécessaires, et
impression desdites images d'index en fonction de ladite détermination.

3. Système d'impression photographique destiné à être utilisé dans le procédé selon la revendication 2, comprenant un moyen de chargement, une station d'exposition, un moyen de transfert pour transférer plusieurs films négatifs (1) de manière successive à partir dudit moyen de chargement vers ladite station d'exposition, un moyen de détection (3, 4) pour détecter la présence ou l'absence d'une ou de plusieurs encoches ou de repères perforés (2) sur un film, avant le procédé d'impression, lesdites encoches ou repères perforés indiquant si des images d'index sont nécessaires ou non pour le film en question, et un moyen de jugement pour diriger l'appareil en vue de l'impression d'images d'index en fonction de la détection d'une ou de plusieurs encoches ou de repères perforés (2).
